# EUROPEAN PATENT APPLICATION

(11) **EP 4 398 101 A1**
(43) Date of publication of application: **10.07.2024**
(21) Application number: 23864116.1
(22) Date of filing: 22.09.2023
(51) Int. Cl.: G06F 9/48, G06F 9/50

(54) **TASK SCHEDULING EXECUTION METHOD, AND GENERATION METHOD AND APPARATUS FOR TASK SCHEDULING EXECUTION INSTRUCTION**

(30) Priority: 22.11.2022 CN 202211467576
(71) Applicant: Beijing Horizon Information Technology Co., Ltd., Beijing 100094 (CN)
(72) Inventor: LI, Jianjun, Beijing 100094 (CN); WANG, Zhenjiang, Beijing 100094 (CN); HUANG, Chang, Beijing 100094 (CN)
(74) Representative: Dehns Germany Partnerschaft mbB
(86) International application number: PCT/CN2023/120845
(87) International publication number: WO 2024/109312

(57) **Abstract**

Disclosed are a task scheduling and execution method and a method and an apparatus for generating a task scheduling and execution instruction. The task scheduling and execution method includes: determining that there are first target tasks corresponding to first-version model files, wherein the first-version model file occupies computing resources of a neural network accelerator according to a predetermined occupancy ratio in a running state; determining a set of the first target tasks that satisfy a preset concurrent execution condition as a first task group based on a state information group of the first-version model file and the predetermined occupancy ratio, wherein the state information group of the first-version model file includes states respectively corresponding to each function unit of the neural network accelerator in the running state of the first-version model file; and concurrently running the first-version model files respectively corresponding to the first target tasks in the first task group. According to the embodiments of this disclosure, a plurality of tasks can be processed concurrently by the neural network accelerator, so that computational efficiency of the neural network accelerator can be improved.

## Description

This application claims the priority to the Chinese Patent Application No. CN202211467576.X, filed with the China National Intellectual Property Administration on November 22, 2022 and entitled "TASK SCHEDULING AND EXECUTION METHOD, AND METHOD AND APPARATUS FOR GENERATING TASK SCHEDULING AND EXECUTION INSTRUCTION", which is incorporated herein by reference in its entirety.

### FIELD OF THE INVENTION

This disclosure relates to technologies of chips, and in particular, to a task scheduling and execution method, and a method and an apparatus for generating a task scheduling and execution instruction.

### BACKGROUND OF THE INVENTION

A chip may include a neural network accelerator, for example, a may include a brain processing unit (BPU). In some cases, there are a plurality of to-be-processed tasks in the neural network accelerator, which generally executes these tasks sequentially in a chronological order in which the tasks are generated.

### SUMMARY OF THE INVENTION

Embodiments of this disclosure provide a task scheduling and execution method, and a method and an apparatus for generating a task scheduling and execution instruction.

According to an aspect of an embodiment of this disclosure, a task scheduling and execution method is provided, including:
determining that there are first target tasks corresponding to first-version model files, wherein the first-version model file occupies computing resources of a neural network accelerator according to a predetermined occupancy ratio in a running state;
determining a set of the first target tasks that satisfy a preset concurrent execution condition as a first task group based on a state information group of the first-version model file and the predetermined occupancy ratio, wherein the state information group of the first-version model file includes states respectively corresponding to various function units of the neural network accelerator in the running state of the first-version model file; and
concurrently running the first-version model files respectively corresponding to the first target tasks in the first task group.

According to another aspect of an embodiment of this disclosure, a method for generating a task scheduling and execution instruction is provided, including:
generating a first-version model file corresponding to a first operator group through compilation, wherein the first-version model file occupies computing resources of a neural network accelerator according to a predetermined occupancy ratio in a running state;
generating a state information group of the first-version model file based on a function unit group corresponding to the first operator group, wherein the function unit group corresponding to the first operator group includes each function unit of the neural network accelerator that is used for running of the first operator group, and the state information group of the first-version model file includes states respectively corresponding to each function unit of the neural network accelerator in the running state of the first-version model file; and
generating a task scheduling and execution instruction based on the first-version model file, the state information group of the first-version model file, and the predetermined occupancy ratio, wherein the task scheduling and execution instruction is used for implementing the task scheduling and execution method described above.

According to still another aspect of an embodiment of this disclosure, a task scheduling and execution apparatus is provided, including:
a first determining module, configured to determine that there are first target tasks corresponding to first-version model files, wherein the first-version model file occupies computing resources of a neural network accelerator according to a predetermined occupancy ratio in a running state;
a second determining module, configured to determine a set of the first target tasks that are determined by the first determining module and satisfy a preset concurrent execution condition as a first task group based on a state information group of the first-version model file and the predetermined occupancy ratio, wherein the state information group of the first-version model file includes states respectively corresponding to various function units of the neural network accelerator in the running state of the first-version model file; and
a first running module, configured to concurrently run the first-version model files respectively corresponding to the first target tasks in the first task group determined by the second determining module.

According to yet another aspect of an embodiment of this disclosure, an apparatus for generating a task scheduling and execution instruction is provided, including:
a first generation module, configured to generate a first-version model file corresponding to a first operator group through compilation, wherein the first-version model file occupies computing resources of a neural network accelerator according to a predetermined occupancy ratio in a running state;
a second generation module, configured to generate a state information group of the first-version model file generated by the first generation module based on a function unit group corresponding to the first operator group, wherein the function unit group corresponding to the first operator group includes each function unit of the neural network accelerator that is used for running of the first operator group, and the state information group of the first-version model file includes states respectively corresponding to various function units of the neural network accelerator in the running state of the first-version model file; and
a third generation module, configured to generate a task scheduling and execution instruction based on the first-version model file generated by the first generation module, the state information group of the first-version model file generated by the second generation module, and the predetermined occupancy ratio, wherein the task scheduling and execution instruction is used for implementing the task scheduling and execution method described above.

According to still yet another aspect of an embodiment of this disclosure, a computer readable storage medium is provided. The storage medium stores a computer program, and the computer program is used for implementing the task scheduling and execution method or the method for generating a task scheduling and execution instruction described above.

According to a further aspect of an embodiment of this disclosure, an electronic device is provided, including:
a processor; and
a memory, configured to store processor-executable instructions, where
the processor is configured to read the executable instructions from the memory, and execute the instructions to implement the task scheduling and execution method or the method for generating a task scheduling and execution instruction described above.

According to a still further aspect of an embodiment of this disclosure, a computer program product is provided. When instructions in the computer program product are executed by a processor, the task scheduling and execution method or the method for generating a task scheduling and execution instruction described above is implemented.

According to the task scheduling and execution method, the method and the apparatus for generating a task scheduling and execution instruction, the computer readable storage medium, the electronic device, and the product that are provided in the foregoing embodiments of this disclosure, the first task group may be determined based on the state information group of the first-version model file, and the predetermined occupancy ratio of the first-version model file for the computing resources of the neural network accelerator in the running state. Moreover, the first-version model files respectively corresponding to the first target tasks in the first task group are run concurrently. In this way, it is equivalent that the neural network accelerator processes a plurality of tasks concurrently by using a task scheduling mechanism, so that computational efficiency of the neural network accelerator can be improved, thereby better satisfying practical requirements.

### BRIEF DESCRIPTION OF THE DRAWINGS

FIG. 1 is a schematic diagram of a structure of a chip according to an exemplary embodiment of this disclosure;
FIG. 2 is a diagram of a principle for a neural network accelerator to process a plurality of tasks concurrently according to an embodiment of this disclosure;
FIG. 3 is a schematic flowchart of a task scheduling and execution method according to an exemplary embodiment of this disclosure;
FIG. 4 is a schematic flowchart of a task scheduling and execution method according to another exemplary embodiment of this disclosure;
FIG. 5-1 is a schematic diagram of a task queue and a task scheduling table in a task scheduling and execution method according to an exemplary embodiment of this disclosure;
FIG. 5-2 is a schematic diagram of task splitting in a task scheduling and execution method according to an exemplary embodiment of this disclosure;
FIG. 6 is a schematic flowchart of a task scheduling and execution method according to still another exemplary embodiment of this disclosure;
FIG. 7 is a schematic flowchart of a method for generating a task scheduling and execution instruction according to an exemplary embodiment of this disclosure;
FIG. 8 is a schematic flowchart of a method for generating a task scheduling and execution instruction according to another exemplary embodiment of this disclosure;
FIG. 9 is a schematic flowchart of a method for generating a task scheduling and execution instruction according to still another exemplary embodiment of this disclosure;
FIG. 10 is a schematic flowchart of a method for generating a task scheduling and execution instruction according to yet another exemplary embodiment of this disclosure;
FIG. 11 is a schematic diagram of a structure of a task scheduling and execution apparatus according to an exemplary embodiment of this disclosure;
FIG. 12 is a schematic diagram of a structure of a task scheduling and execution apparatus according to another exemplary embodiment of this disclosure;
FIG. 13 is a schematic diagram of a structure of an apparatus for generating a task scheduling and execution instruction according to an exemplary embodiment of this disclosure;
FIG. 14 is a schematic diagram of a structure of an apparatus for generating a task scheduling and execution instruction according to another exemplary embodiment of this disclosure; and
FIG. 15 is a diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

Some chips may include neural network accelerators. For example, an artificial intelligence (AI) chip may include a BPU. In some cases, there are a plurality of to-be-processed tasks in the neural network accelerator, which generally executes these tasks sequentially in a chronological order in which the tasks are generated. The neural network accelerator executes only one task at a time.

### Exemplary system

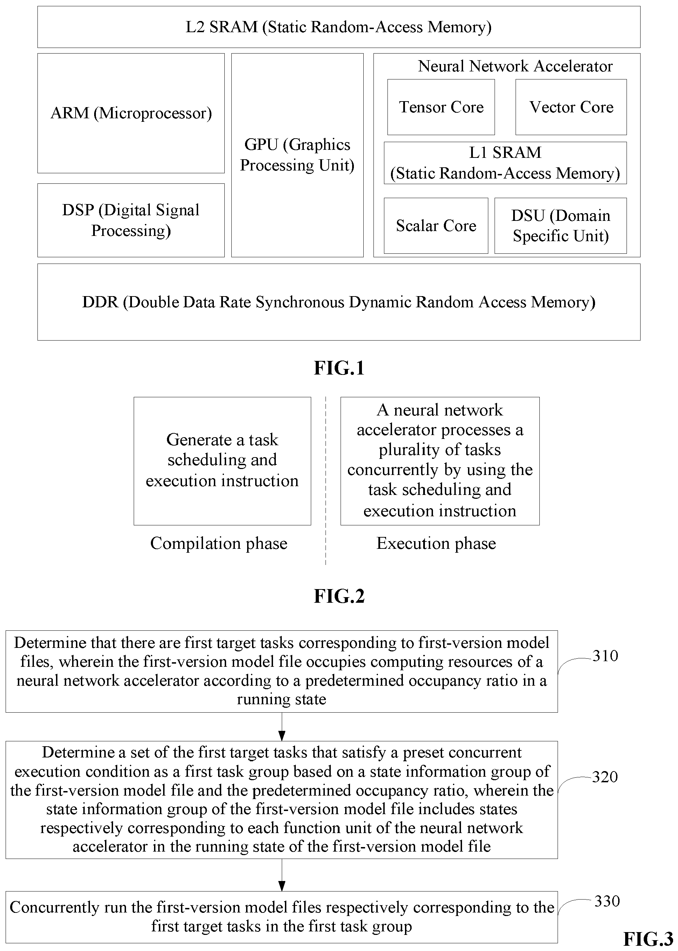

A neural network accelerator in a chip may include a computing component and a plurality of function units. L1 SRAM (static random-access memory) in FIG. 1 may serve as a computing component. Each of a tensor core, a vector core, a scalar core, and a DSU (domain specific unit) in FIG. 1 may serve as a function unit.

Optionally, in addition to the neural network accelerator, the chip may also include other components. For example, the chip may further include a graphics processing unit (GPU) and a digital signal processor (DSP).

It should be noted that, as shown in FIG. 2, improvements may be made to a compilation phase and an execution phase respectively in embodiments of this disclosure. During the compilation phase, a task scheduling and execution instruction may be generated. During the execution phase, the task scheduling and execution instruction generated during the compilation phase may be executed to implement concurrent processing of a plurality of tasks by the neural network accelerator, thereby improving computational efficiency of the neural network accelerator.

### Exemplary method

FIG. 3 is a schematic flowchart of a task scheduling and execution method according to an exemplary embodiment of this disclosure. The method shown in FIG. 3 includes steps 310, 320, and 330. The steps are describe below, respectively.

Step 310. Determine that there are first target tasks corresponding to first-version model files, wherein the first-version model file occupies computing resources of a neural network accelerator according to a predetermined occupancy ratio in a running state.

In an optional example, step 310 may be performed by a processor by invoking corresponding instructions stored in a memory, or may be performed by a first determining module that is run by the processor.

In step 310, all to-be-processed tasks of the neural network accelerator may be determined, and these tasks may be traversed to determine which of these tasks have corresponding first-version model files. Subsequently, each task with a corresponding first-version model file may be used as a first target task. In this way, several first target tasks may be determined by performing step 310 (for ease of description, it is assumed in the following that a quantity of the first target tasks is N, wherein N may be an integer greater than or equal to 2).

It should be noted that a relationship between any first target task and the corresponding first-version model file may be understood as below: The first target task may be completed through running of the first-version model file; and in the running state of the first-version model file, an occupancy ratio of the first-version model file for the computing resources of the neural network accelerator is a predetermined occupancy ratio.

Optionally, any predetermined occupancy ratio may be any ratio greater than 0% but less than 100%, for example, may be 30%, 40%, or 60%. Predetermined occupancy ratios corresponding to different first-version model files may be the same or different. The computing resource of the neural network accelerator may refer to a computing resources of a computing component in the neural network accelerator, such as a computing resource of L1 SRAM in FIG. 1.

Step 320. Determine a set of the first target tasks that satisfy a preset concurrent execution condition as a first task group based on a state information group of the first-version model file and the predetermined occupancy ratio, wherein the state information group of the first-version model file includes states respectively corresponding to various function units of the neural network accelerator in the running state of the first-version model file.

In an optional example, step 320 may be performed by the processor by invoking corresponding instructions stored in the memory, or may be performed by a second determining module that is run by the processor.

After N first target tasks are determined by performing step 310, the corresponding state information group and the predetermined occupancy ratio may be determined for the first-version model file corresponding to each one of the N first target tasks. Thus, N state information groups and N predetermined occupancy ratios may be obtained. In the state information group corresponding to any first-version model file, the state corresponding to any function unit may be used to indicate whether the function unit is used in the running state of the first-version model file. With reference to the N state information groups and the N predetermined occupancy ratios, which of the N first target tasks meet the preset concurrent execution condition may be determined, thereby determining the first task group.

In an example, the N first target tasks may be specifically 4 first target tasks, which respectively are tasks 1 to 4, and only the task 1, the task 3, and the task 4 satisfy the preset concurrent execution condition. In this case, a set consisting of the task 1, the task 3, and the task 4 may be determined as a first task group.

In another example, the N first target tasks may be specifically 6 first target tasks, which respectively are tasks 1 to 6. Moreover, the tasks 1 to 3 satisfy the preset concurrent execution condition, and the tasks 4 to 6 satisfy the preset concurrent execution condition. In this case, a set consisting of the task 1 to 3 may be determined as a first task group, and the tasks 4 to 6 may be determined as another first task group.

Step 330. Concurrently run the first-version model files respectively corresponding to the first target tasks in the first task group.

In an optional example, step 330 may be performed by the processor by invoking corresponding instructions stored in the memory, or may be performed by a first running module that is run by the processor.

If there is one first task group, and the first task group is a set consisting of a task 1, a task 3, and a task 4, the first-version model files respectively corresponding to the task 1, the task 3, and the task 4 may be run concurrently by using the neural network accelerator. In this way, the neural network accelerator processes the task 1, the task 3, and the task 4, concurrently.

If there are two first task groups, wherein one of the first task groups is a set consisting of tasks 1 to 3, and the other first task group is a set consisting of tasks 4 to 6, the first-version model files respectively corresponding to the task 1, the task 2, and the task 3 may be first run concurrently by using the neural network accelerator. In this way, the neural network accelerator processes the task 1, the task 2, and the task 3, concurrently. Subsequently, the first-version model files respectively corresponding to the task 4, the task 5, and the task 6 are run concurrently by using the neural network accelerator. In this way, the neural network accelerator processes the task 4, the task 5, and the task 6, concurrently. Certainly, according to an actual situation, the first-version model files respectively corresponding to the task 4, the task 5, and the task 6 may alternatively be first run concurrently by using the neural network accelerator, and then the first-version model files respectively corresponding to the task 1, the task 2, and the task 3 may be run concurrently by using the neural network accelerator.

In this embodiment of this disclosure, the first task group may be determined based on the state information group of the first-version model file and the predetermined occupancy ratio of the first-version model file for the computing resources of the neural network accelerator in the running state. Moreover, the first-version model files respectively corresponding to the first target tasks in the first task group are run concurrently. In this way, it is equivalent that the neural network accelerator processes a plurality of tasks concurrently by using a task scheduling mechanism, so that computational efficiency of the neural network accelerator can be improved, thereby better satisfying practical requirements.

In an optional example, that a plurality of the first target tasks satisfy the preset concurrent execution condition includes any one or more of the following.
(1) In an information set composed of state information groups respectively corresponding to the first target tasks in the plurality of first target tasks, for all states corresponding to any one of the function units: one state is a shared state, and remaining states are all idle states; or alternatively, all states are idle states.
(2) A sum of predetermined occupancy ratios respectively corresponding to the first target tasks in the plurality of first target tasks is smaller than a preset ratio.

Optionally, the preset ratio may be 100%. Alternatively, the preset ratio may be a ratio less than but close to 100%. For ease of understanding, description is made in this embodiment of this disclosure by using an example in which the preset ratio is 100%.

It should be noted that in the state information group corresponding to any first target task, the state corresponding to any function unit may be either of a shared state and an idle state. The shared state may be represented by using shared, and the idle state may be represented by using available.

In an example, the neural network accelerator includes three function units: a Tensor Core, a Vector core, and a DSU; and the N first target tasks are specifically 4 first target tasks: tasks 1 to 4. The state information groups corresponding to the tasks 1 to 4 are as follows:
Task 1: Tensor core-shared, vector core-available, and DSU-available
Task 2: Tensor core-shared, vector core-shared, and DSU-shared
Task 3: Tensor core-available, vector core-shared, and DSU-available
Task 4: Tensor core-available, vector core-available, and DSU-shared

For example, a form of "A-shared" indicates that a state corresponding to a function unit A is a shared state, and a form of "B-available" indicates that a state corresponding to a function unit B is an idle state.

It may be easily learned that among the task 1, the task 3, and the task 4, the state of the tensor core is a shared state only for the task 1, while the state of the tensor core is an idle state for the other two; among the task 1, the task 3, and the task 4, the state of the vector core is a shared state only for the task 3, while the state of the vector core is an idle state for the other two; and among the task 1, the task 3, and the task 4, the state of the DSU is a shared state only for the task 4, while the state of the DSP is an idle state for the other two. In this case, for the task 1, the task 3, and the task 4, the condition specified in (1) is satisfied. Meanwhile, it is assumed that predetermined occupancy ratios respectively corresponding to the tasks 1 to 4 are 30%, 30%, 25%, and 35%. Obviously, a sum of the three predetermined occupancy ratios corresponding to the task 1, the task 3, and the task 4 is less than 100%. In this case, for the task 1, the task 3, and the task 4, the condition specified in (2) is also satisfied. Thus, it may be determined that the task 1, the task 3, and the task 4 satisfy the preset concurrent execution condition. In this way, while the task 1 is executed through use of the tensor core, the task 3 may be executed through use of the vector core, and the task 4 may be executed through use of the DSU. In other words, the neural network accelerator may execute the task 1, the task 3, and the task 4 at same time.

It should be noted that, when the condition specified in (1) is satisfied for the task 1, the task 3, and the task 4, it is assumed that the predetermined occupancy ratios respectively corresponding to the tasks 1 to 4 are 40%, 25%, 50%, and 65%. Obviously, a sum of the three predetermined occupancy ratios corresponding to the task 1, the task 3, and the task 4 is greater than 100%; a sum of the two predetermined occupancy ratios corresponding to the task 1 and the task 4 is greater than 100%; a sum of the two predetermined occupancy ratios corresponding to the task 3 and the task 4 is greater than 100%; and a sum of the two predetermined occupancy ratios corresponding to the task 1 and the task 3 is smaller than 100%. In other words, for the task 1 and the task 3, the condition specified in (2) is satisfied. Thus, it may be determined that the task 1 and the task 3 satisfy the preset concurrent execution condition. In this way, while the task 1 is executed through the use of the tensor core, the task 3 may be executed through the use of the vector core. In other words, the neural network accelerator may execute the task 1 and the task 3 at same time.

It is assumed that the N first target tasks in the foregoing example are not 4 first target tasks, but are 5 first target tasks. For example, in addition to the foregoing tasks 1 to 4, a task 5 is also included. The predetermined occupancy ratio corresponding to the task 5 is 30%, and the state information group corresponding to the task 5 is as follows.

Task 5: Tensor core-shared, vector core-shared, and DSU-available

If it is assumed that the predetermined occupancy ratios respectively corresponding to the tasks 1 to 4 are 40%, 25%, 50%, and 65%, it may be easily learned that the task 1 and the task 3 satisfy the preset concurrent execution condition. Moreover, the state of the tensor core is a shared state for only one of the task 4 and the task 5, the state of the vector core is a shared state for only one of the task 4 and the task 5, the state of the DSU is a shared state for only one of the task 4 and the task 5, and a sum of the two predetermined occupancy ratios corresponding to the task 4 and the task 5 is 95%, which is smaller than 100%. Therefore, it may be determined that the task 4 and the task 5 also satisfy the preset concurrent execution condition. In this way, the task 1 and the task 3 may be classified into one first task group, while the task 4 and the task 5 may be classified into another first task group. Thus, two first task groups are determined.

In this embodiment of this disclosure, according to the condition specified in (1), for each function unit in the neural network accelerator, at most one first target task in the first task group may use the function unit at same time. This may prevent different first target tasks in the first task group from using a same function unit at same time, thus avoiding conflicts in use of the function unit. According to the condition specified in (2), it may be ensured that the computing resources of the neural network accelerator can support concurrent processing for various first target tasks in the first task group, thereby ensuring successful completion of each first target task in the first task group through the concurrent processing. In this way, utilization of the computing component in the neural network accelerator may be improved.

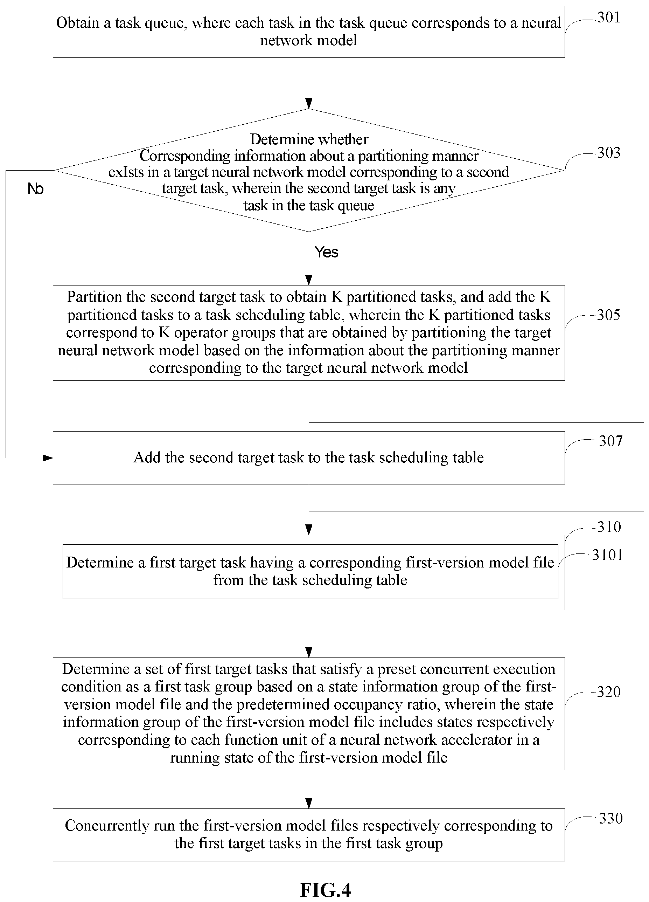

On the basis of the embodiment shown in FIG. 3, as shown in FIG. 4, the method further includes steps 301, 303, 305, and 307.

Step 301. Obtain a task queue, wherein each task in the task queue corresponds to one neural network model.

In an optional example, step 301 may be performed by the processor by invoking corresponding instructions stored in the memory, or may be performed by an obtaining module that is run by the processor.

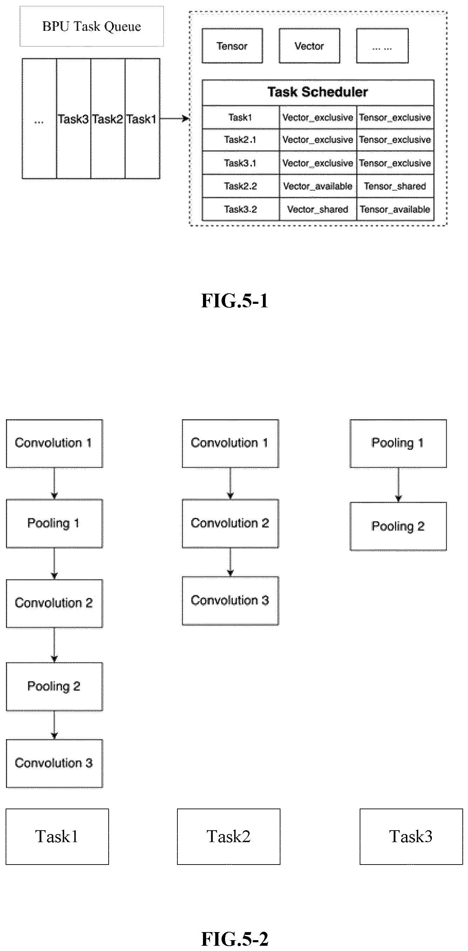

Optionally, the task queue may be a BPU task queue shown in FIG. 5-1.

It may be understood that the neural network model may be considered as a sequence of operator units. In other words, the neural network model may include a plurality of (such as 40, 50, or 100) operator units arranged in a certain order. The plurality of operator units include, but are not limited to a convolution (Conv) operator unit, a pooling (pool) operator unit, a deconvolution operator unit, a rectified linear unit (ReLU) operator unit, and a batch normalization (BN) operator unit.

It should be noted that a relationship between any task in the task queue and the corresponding neural network model may be understood as: completion of the task relies on the neural network model. For example, the task is a target detection task, and the neural network model is a model for task detection. In this case, an image on which target detection is to be performed is provided as input to the neural network model for operation, and a target detection result output by the neural network model is obtained. Thus, it may be considered that the task has been completed.

Step 303. Determine whether corresponding information about a partitioning manner exists in a target neural network model corresponding to a second target task, wherein the second target task is any task in the task queue; perform step 305 in response to that the corresponding information about the partitioning manner exists in the target neural network model; and perform step 307 in response to that the corresponding information about the partitioning manner does not exist in the target neural network model.

In an optional example, step 303 may be performed by the processor by invoking corresponding instructions stored in the memory, or may be performed by a third determining module that is run by the processor.

Optionally, a corresponding relationship between the neural network model and the information about the partitioning manner may be stored in a target storage area. For an origin of the corresponding relationship stored in the target storage area, reference may be made to relevant descriptions about a compilation phase in the following. This is not elaborated herein.

In step 303, the corresponding relationship stored in the target storage area may be traversed. Step 305 may be performed if by traversing the corresponding relationship stored in the target storage area, it is determined that the information about the partitioning manner corresponding to the target neural network model exists in the corresponding relationship stored in the target storage area. Step 307 may be performed if by traversing the corresponding relationship stored in the target storage area, it is determined that the information about the partitioning manner corresponding to the target neural network model does not exist in the corresponding relationship stored in the target storage area.

Step 305. Partition the second target task to obtain K partitioned tasks, and add the K partitioned tasks to a task scheduling table, wherein the K partitioned tasks correspond to K operator groups that are obtained by partitioning the target neural network model based on the information about the partitioning manner corresponding to the target neural network model.

In an optional example, step 305 may be performed by the processor by invoking corresponding instructions stored in the memory, or may be performed by a first processing module that is run by the processor.

Optionally, the task scheduling table may be a task scheduler shown in FIG. 5-1.

It should be noted that the information about the partitioning manner corresponding to the target neural network model may be used to partition the target neural network model into K operator groups. Each operator group includes at least one operator unit in the target neural network model. In this way, the second target task may be partitioned based on the information about the partitioning manner corresponding to the target neural network model, to obtain K partitioned tasks in one-to-one correspondence to the K operator groups. Optionally, K may be 2, 3, 4, or an integer greater than 4, which is not enumerated herein.

Step 307. Add the second target task to the task scheduling table.

In an optional example, step 307 may be performed by the processor by invoking corresponding instructions stored in the memory, or may be performed by a second processing module that is run by the processor.

Step 310 includes step 3101.

Step 3101. Determine the first target task having the corresponding first-version model file from the task scheduling table.

In step 3101, all tasks in the task scheduling table may be traversed to determine which of these tasks have corresponding first-version model files. Subsequently, each task with a corresponding first-version model file may be used as a first target task.

In an example, the second target task is a task 1 in FIG. 5-2; and the target neural network model includes 5 operator units, which respectively are convolution 1, pooling 1, convolution 2, pooling 2, and convolution3. In this case, the task 1 may be partitioned to obtain 5 partitioned tasks, which respectively are a task 1.1, a task 1.2, a task 1.3, a task 1.4, and a task 1.5. The task 1.1 corresponds to the convolution 1, the task 1.2 corresponds to the pooling 1, the task 1.3 corresponds to the convolution 2, the task 1.4 corresponds to the pooling 2, and the task 1.5 corresponds to the convolution 3. If it is assumed that each convolution is executed on the tensor core and each pooling is executed on the vector core, the task 1 requires the use of the tensor core and the vector core for execution, while the task 1.1 requires the use of the tensor core for execution, the task 1.2 requires the use of the vector core for execution, the task 1.3 requires the use of the tensor core for execution, the task 1.4 requires the use of the vector core for execution, and the task 1.5 requires the use of the vector core for execution. Obviously, during execution, any one of the tasks 1.1 to 1.5 requires use of fewer function units than the task 1.

In this way, if each of the task 1.1 and the task 1.2 may be used as a first target task, and a sum of two predetermined occupancy ratios corresponding to the task 1.1 and the task 1.2 is less than 100%, the neural network accelerator may process the task 1.1 and the task 1.2 concurrently, thereby improving the computational efficiency of the neural network accelerator. Similarly, if each of the task 1.3 and the task 1.4 may be used as a first target task in the following, and a sum of two predetermined occupancy ratios corresponding to the task 1.3 and the task 1.4 is less than 100%, the neural network accelerator may process the task 1.3 and the task 1.4, concurrently.

In this embodiment of this disclosure, based on whether the corresponding information about the partitioning manner exists in the neural network model corresponding to the second target task in the task queue, it may be determined whether to directly add the second target task to the task scheduling table or to add the K partitioned tasks obtained by partitioning the second target task to the task scheduling table. In this way, for a task with corresponding information about the partitioning manner, several partitioned tasks with smaller granularity as compared with this task may be obtained through partitioning. Each partitioned task requires relatively fewer function units for execution. Therefore, a probability of concurrently processing different tasks in the task scheduling table may be improved, thereby improving the computational efficiency of the neural network accelerator.

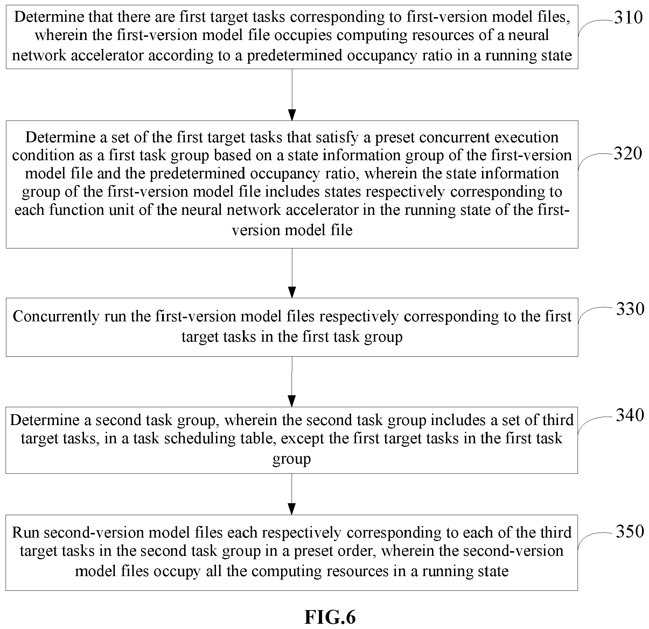

On the basis of the embodiment shown in FIG. 4, as shown in FIG. 6, the method further includes steps 340 and 350.

Step 340. Determine a second task group, wherein the second task group includes a set of third target tasks, in the task scheduling table, except the first target tasks in the first task group.

In an optional example, step 340 may be performed by the processor by invoking corresponding instructions stored in the memory, or may be performed by a fourth determining module that is run by the processor.

In step 340, all tasks in the task scheduling table may be traversed to determine which tasks in the task scheduling table are not in the first task group. Each of these tasks may be used as a third target task, and a set of all third target tasks may be used as the second task group.

Step 350. Run second-version model files respectively corresponding to the third target tasks in the second task group in a preset order, wherein the second-version model files occupy all the computing resources in a running state.

In an optional example, step 350 may be performed by the processor by invoking corresponding instructions stored in the memory, or may be performed by a second running module that is run by the processor.

It should be noted that a relationship between any third target task and the corresponding second-version model file may be understood as below: The third target task may be completed through running of the second-version model file; and in the running state of the second-version model file, an occupancy ratio of the second-version model file for the computing resources of the neural network accelerator is 100%.

Optionally, any second-version model file may have a state information group. Moreover, the state information group of any second-version model includes states respectively corresponding to the function units of the neural network accelerator in the running state of the second-version model file. Moreover, all states in the state information group are exclusive states, which may be represented by "exclusive".

In step 350, time of adding each third target task in the second task group to the task scheduling table may be determined. Moreover, the second-version model files each respectively corresponding to each of the third target tasks in the second task group are run sequentially by the neural network accelerator in an order of adding time from early to late. Thus, serial processing for all the third target tasks in the second task group may be implemented.

In this embodiment of this disclosure, for some of tasks in the task scheduling table that cannot be processed concurrently, serial processing may be performed on these tasks by the neural network accelerator. In this way, all tasks in the task scheduling table can be successfully processed, without causing any task omissions.

In an example, as shown in FIG. 5-1, there are three tasks in the task queue, which respectively are a task 1, a task 2, and a task 3. It is assumed that a neural network model corresponding to the task 1 is a model 1; a neural network model corresponding to the task 2 is a model 2; a neural network model corresponding to the task 3 is a model 3; the model 1 does not have corresponding information about the partitioning manner; the model 2 has corresponding information about the partitioning manner, which is used to partition the model 2 into an operator group 1 and an operator group 2; and the model 3 has corresponding information about the partitioning manner, which is used to partition the model 3 into an operator group 3 and an operator group 4. In this case, the task 1 may be not partitioned, while the task 2 may be partitioned to obtain a task 2.1 and a task 2.2. The task 3 may also be partitioned to obtain a task 3.1 and a task 3.2. The task 2.1 corresponds to the operator group 1, the task 2.2 corresponds to the operator group 2, the task 3.1 corresponds to the operator group 3, and the task 3.2 corresponds to the operator group 4. The task 1, the task 2.1, the task 2.2, the task 3.1, and the task 3.2 may all be added to the task scheduler.

If it is assumed that the neural network accelerator includes two function units, which respectively are a tensor core and a vector core, and each of the task 1, the task 2.1, and the task 3.1 has no corresponding first-version model file, but only has a corresponding second-version model file, while both the task 2.2 and the task 3.2 have corresponding first-version model files, state information groups of the second-version model files respectively corresponding to the task 1, the task 2.1, and the task 3.1 and state information groups of the first-version model files respectively corresponding to the task 2.2 and the task 3.2 may also be added to the task scheduler. For specific content added to the task schedule, reference may be made to FIG. 5-1. For example, a form of "A_excludive" indicates that a state corresponding to a function unit A is an exclusive state, a form of "B_available" indicates that a state corresponding to a function unit B is an idle state, and a form of "C_shared" indicates that a state corresponding to a function unit C is a shared state.

Because the task 1, the task 2.1, and the task 3.1 do not have corresponding first-version model files, each of the task 1, the task 2.1, and the task 3.1 cannot be used as a first target task, but can only be used as one third target task separately. In this way, either of the task 1, the task 2.1, and the task 3.1 cannot be processed concurrently with other tasks, but can only be processed separately. The state of the Tensor Core is a shared state for only one of the task 2.2 and the task 3.2, and the state of the Vector core is a shared state for only one of the only one of the task 2.2 and the task 3.2. If a sum of predetermined occupancy ratios corresponding to the first-version model files respectively corresponding to the task 2.2 and the task 3.2 is less than 100%, it may be determined that the task 2.2 and the task 3.2 meet the preset concurrent execution condition. In this case, the neural network accelerator may first process the task 2.2 and the task 3.2 concurrently, and then process the task 1, the task 2.1, and the task 3.1 sequentially, so as to process all the tasks in the task scheduler.

Any task scheduling and execution method provided in the embodiments of this disclosure may be implemented by any suitable device with a data processing capability, including but not limited to a terminal device and a server. Alternatively, any task scheduling and execution method provided in the embodiments of this disclosure may be implemented by a processor. For example, the processor implements any task scheduling and execution method described in the embodiments of this disclosure by invoking corresponding instructions stored in a memory. Details are not described below again.

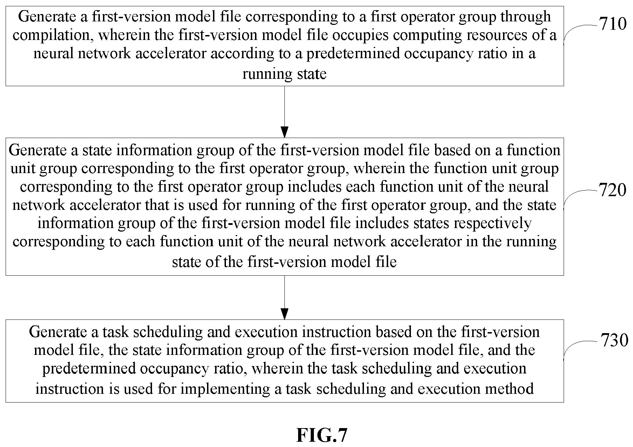

FIG. 7 is a schematic flowchart of a method for generating a task scheduling and execution instruction according to an exemplary embodiment of this disclosure. The method shown in FIG. 7 includes steps 710, 720, and 730. The steps are describe below, respectively.

Step 710. Generate a first-version model file corresponding to a first operator group through compilation, wherein the first-version model file occupies computing resources of a neural network accelerator according to a predetermined occupancy ratio in a running state.

In an optional example, step 710 may be performed by a processor by invoking corresponding instructions stored in a memory, or may be performed by a first generation module that is run by the processor.

Optionally, an entire neural network model may be used as a first operator group, or a set of several consecutive operator units in an entire neural network model may be used as the first operator group. There may be a plurality of first operator groups, each of which may correspond to a first target task described above.

In step 710, a compiler may compile to generate the first-version model file corresponding to each first operator group. A specific compilation manner may be implemented in any feasible way according to actual requirements, and details are not described in this disclosure.

Step 720. Generate a state information group of the first-version model file based on a function unit group corresponding to the first operator group, wherein the function unit group corresponding to the first operator group includes each function unit of the neural network accelerator that is used for running of the first operator group, and the state information group of the first-version model file includes states each respectively corresponding to each function unit of the neural network accelerator in the running state of the first-version model file.

In an optional example, step 720 may be performed by the processor by invoking corresponding instructions stored in the memory, or may be performed by a second generation module that is run by the processor.

In step 720, the function unit group corresponding to the first operator group may be determined first. If it is assumed that the neural network accelerator includes three function units, which respectively are a tensor core, a vector core, and a DSU, and the first operator group requires the Tensor Core and the Vector Core for running, the function unit group corresponding to the first operator group includes the Tensor Core and the Vector Core. Subsequently, the state information group of the first-version model file may be generated with reference to the function unit group corresponding to the first operator group. In the state information group of the first-version model file, a state corresponding to any function unit may be used to indicate whether the function unit is used in the running state of the first-version model file.

Step 730. Generate a task scheduling and execution instruction based on the first-version model file, the state information group of the first-version model file, and the predetermined occupancy ratio, wherein the task scheduling and execution instruction is used for implementing a task scheduling and execution method (which may be specifically the task scheduling and execution method in the embodiment shown in FIG. 3).

In an optional example, step 730 may be performed by the processor by invoking corresponding instructions stored in the memory, or may be performed by a third generation module that is run by the processor.

In this embodiment of this disclosure, during the compilation phase, the step of generating the first-version model file and the step of generating the state information group of the first-version model file may be performed sequentially. Further, the task scheduling and execution instruction may be generated in combination with the predetermined occupancy ratio corresponding to the first-version model file. In this way, during an execution phase, by executing the task scheduling and execution instruction generated during the compilation phase, the first target task and a first task group may be determined sequentially, so that first-version model files respectively corresponding to first target tasks in the first task group may be run concurrently. In this way, it is equivalent that the neural network accelerator processes a plurality of tasks concurrently by using a task scheduling mechanism, so that computational efficiency of the neural network accelerator can be improved, thereby better satisfying practical requirements.

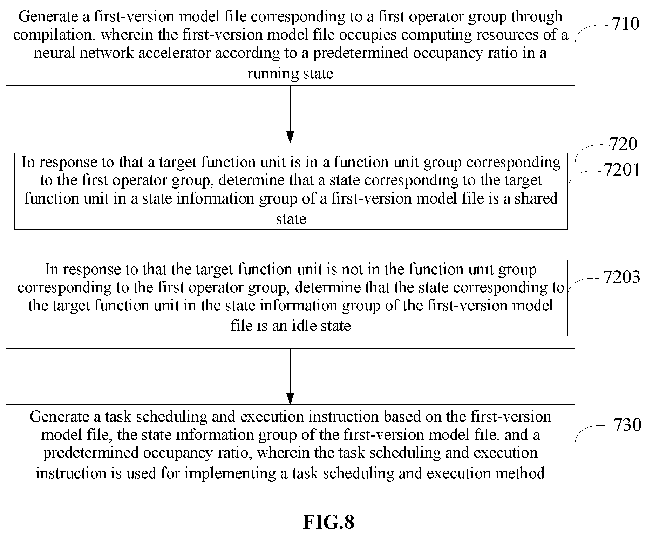

On the basis of the embodiment shown in FIG. 7, any function unit of the neural network accelerator may be used as a target function unit. As shown in FIG. 8, step 720 includes steps 7201 and 7203.

Step 7201. In response to that a target function unit is in the function unit group corresponding to the first operator group, determine that a state corresponding to the target function unit in the state information group of the first-version model file is a shared state.

In an optional example, step 7201 may be performed by a processor by invoking corresponding instructions stored in a memory, or may be performed by a first determining submodule that is run by the processor.

Step 7203. In response to that the target function unit is not in the function unit group corresponding to the first operator group, determine that the state corresponding to the target function unit in the state information group of the first-version model file is an idle state.

In an optional example, step 7203 may be performed by the processor by invoking corresponding instructions stored in the memory, or may be performed by a second determining submodule that is run by the processor.

In an example, the neural network accelerator includes three function units, which respectively are a Tensor Core, a Vector core, and a DSU. The function unit group corresponding to the first operator group includes the Tensor Core and the Vector core. Because the Tensor Core and the Vector core are both in the function unit group corresponding to the first operator group, states respectively corresponding to the Tensor Core and the Vector core in the state information group of the first-version model file may both be shared states. Further, because the DSU is not in the function unit group corresponding to the first operator group, a state corresponding to the DSU in the state information group of the first-version model file may be an idle state. In this way, the state information group of the first-version model file may be represented in the following form: Tensor Core-shared, Vector core-shared, and DSU-available.

In this embodiment of this disclosure, the state of the target function unit corresponding to each function unit in the neural network accelerator may be determined efficiently and reliably with reference to whether the target function unit is in the function unit group corresponding to the first operator group. Thus, the state information group of the first-version model file may be generated efficiently and reliably.

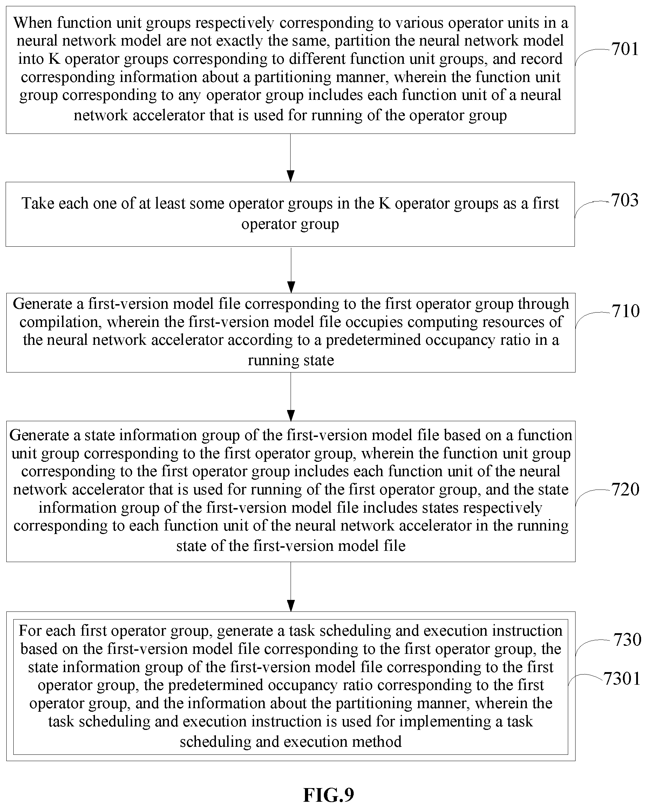

On the basis of the embodiment shown in FIG. 7, as shown in FIG. 9, before step 710, the method further includes steps 701 and 703.

Step 701. When function unit groups respectively corresponding to the operator units in a neural network model are not exactly the same, partition the neural network model into K operator groups corresponding to different function unit groups, and record corresponding information about a partitioning manner, wherein the function unit group corresponding to any operator group includes each function unit of the neural network accelerator that is used for running of the operator group.

In an optional example, step 701 may be performed by the processor by invoking corresponding instructions stored in the memory, or may be performed by a third processing module that is run by the processor.

Optionally, K may be 2, 3, 4, or an integer greater than 4, which is not enumerated herein.

In step 701, the function unit groups respectively corresponding to operator units in the neural network model may be determined first. The function unit group corresponding to any operator unit includes each function unit of the neural network accelerator that is used for running of the operator unit. Subsequently, the function unit groups respectively corresponding to the operator units in the neural network model may be compared to determine whether the function unit groups respectively corresponding to the operator units in the neural network model are exactly the same.

The neural network model may not be partitioned when the function unit groups respectively corresponding to the operator units in the neural network model are exactly the same. The neural network model naturally does not have corresponding information about the partitioning manner.

In an example, the neural network accelerator includes three function units, which respectively are a Tensor Core, a Vector core, and a DSU. The neural network model is a neural network model corresponding to the task 2 in FIG. 5-1. To be specific, the functional unit groups corresponding to the operator units included in the neural network model only include the Tensor core. In this case, the neural network model may not be partitioned. In this way, during the execution phase, the task 2 may be run as a whole on the Tensor core. Similar to the Task 2, during the execution phase, the Task 3 in FIG. 5-1 may be run as a whole on the Vector core.

When the function unit groups respectively corresponding to the operator units in the neural network model are not exactly the same, the neural network model may be partitioned into K operator groups respectively corresponding to different function unit groups, and the corresponding information about the partitioning manner is recorded.

In an example, the neural network accelerator includes three function units, which respectively are a Tensor Core, a Vector core, and a DSU. The neural network model includes 30 operator units, wherein a function unit group corresponding to first 10 operator units includes the Tensor Core and the vector core, a function unit group corresponding to middle 10 operator units includes the Vector core and the DSU, and a function unit group corresponding to last 10 operator units includes the Tensor Core, the vector core, and the DSU. In this case, the neural network model may be partitioned into three operator groups. A first operator group includes first 10 of the 30 operator units included in the neural network model, a second operator group includes middle 10 of the 30 operator units included in the neural network model, and a third operator group includes last 10 of the 30 operator units included in the neural network model. The information about the partitioning manner recorded for the neural network model may be used to indicate that the 30 operator units included in the neural network model are evenly partitioned into 3 parts. Alternatively, the neural network model may be partitioned into two operator groups. A first operator group includes first 10 of the 30 operator units included in the neural network model, and a second operator group includes remaining 20 of the 30 operator units included in the neural network model. The information about the partitioning manner recorded for the neural network model may be used to indicate that the 30 operator units included in the neural network model are partitioned in a ratio of 1:2. It should be noted that, after the information about the partitioning manner is recorded for the neural network model, a corresponding relationship between the neural network model and the information about the partitioning manner may also be stored in a target storage area.

Step 703. Take each one of at least some operator groups in the K operator groups as a first operator group.

In an optional example, step 703 may be performed by the processor by invoking corresponding instructions stored in the memory, or may be performed by a fifth determining module that is run by the processor.

Optionally, each one of the K operator groups may be used as a first operator group.

Step 730 includes:
Step 7301. For each first operator group, generate the task scheduling and execution instruction based on the first-version model file corresponding to the first operator group, the state information group of the first-version model file corresponding to the first operator group, the predetermined occupancy ratio corresponding to the first operator group, and the information about the partitioning manner, wherein the task scheduling and execution instruction is used for implementing a task scheduling and execution method (which may be specifically the task scheduling and execution method in the embodiment shown in FIG. 4).

By performing step 7301, the corresponding task scheduling and execution instruction may be generated for each first operator group.

In this embodiment of this disclosure, when the function unit groups respectively corresponding to the operator units in the neural network model are not exactly the same, the neural network model may be partitioned with reference to the function unit groups respectively corresponding to the operator units, so that different operator groups obtained through partitioning correspond to different function unit groups. Moreover, the information about the partitioning manner is recorded. In this way, during the execution phase, with reference to the corresponding relationships stored in the target storage area, it may be determined whether to directly add a second target task to a task scheduling table, or to partition the second target task and then add the same to the task scheduling table. Through task partitioning, a probability of concurrently processing different tasks in the task scheduling table may be improved.

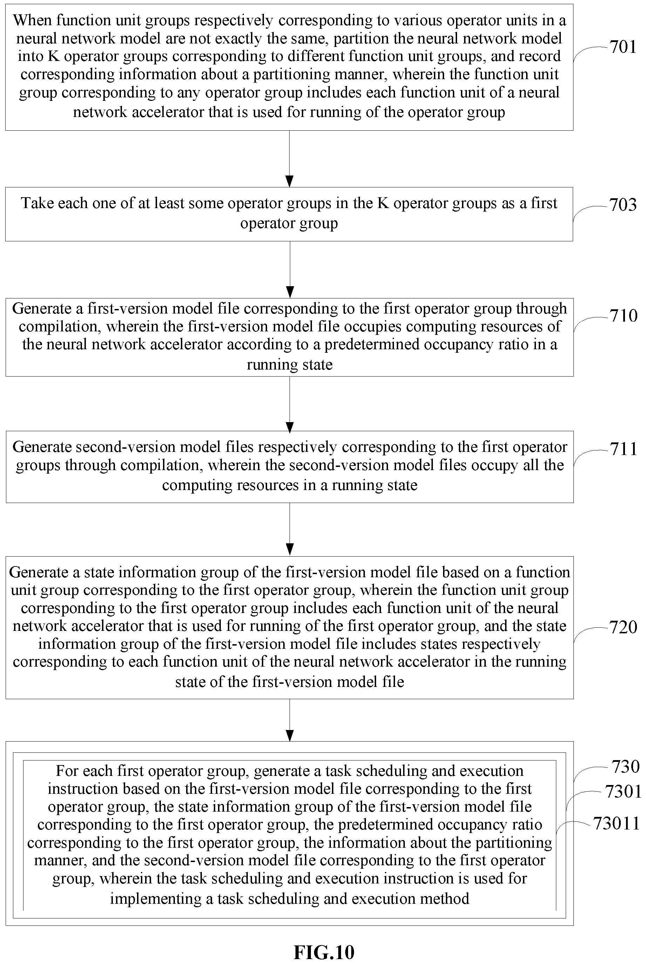

On the basis of the embodiment shown in FIG. 9, as shown in FIG. 10, the method further includes step 711.

Step 711. Generate second-version model files respectively corresponding to the first operator groups through compilation, wherein the second-version model files occupy all the computing resources in a running state.

In an optional example, step 711 may be performed by the processor by invoking corresponding instructions stored in the memory, or may be performed by a fourth generation module that is run by the processor.

In step 711, the compiler may compile to generate the second-version model file corresponding to each first operator group. A specific compilation manner may be implemented in any feasible way according to actual requirements, and details are not described in this disclosure.

Step 7301 includes step 73011.

Step 73011. For each first operator group, generate the task scheduling and execution instruction based on the first-version model file corresponding to the first operator group, the state information group of the first-version model file corresponding to the first operator group, the predetermined occupancy ratio corresponding to the first operator group, the information about the partitioning manner and the second-version model file corresponding to the first operator group, wherein the task scheduling and execution instruction is used for implementing a task scheduling and execution method (which may be specifically the task scheduling and execution method in the embodiment shown in FIG. 6).

In this embodiment of this disclosure, the second-version model files respectively corresponding to the first operator groups are generated, and the generated second-version model files are used for generating the task scheduling and execution instruction. Therefore, during the execution phase, for some of tasks in the task scheduling table that cannot be processed concurrently, serial processing may be performed on these tasks by using the neural network accelerator, so as to ensure that these tasks can be successfully processed. In this way, all tasks in the task scheduling table can be successfully processed.

In an optional example, during the compilation phase, multiple versions of model files may be compiled for each operator group (such as each first operator group described above) in the plurality of operator groups, to generate the first-version model file and the second-version model file that implement same functions. The first-version model file occupies L1 SRAMs according to the predetermined occupancy ratio, while the second-version model file occupies all L1 SRAMs.

It should be noted that both the first-version model file and the second-version model file may have corresponding state information groups, each of which includes a state corresponding to each function unit of the neural network accelerator. There are three possible situations for the state corresponding to any function unit, which respectively are: exclusive, shared, and available. Exclusive indicates that the operator group needs to occupy all L1 SRAMs exclusively. Available indicates that the operator group does not need to use this function unit, and only occupies some of the L1 SRAMs. Shared indicates that the operator group needs to use this function unit, may share other function units in addition to the function unit that needs to be used thereby, and only occupies some of the L1 SRAMs.

In this way, during the execution phase, which tasks meet the preset concurrent execution condition can be determined efficiently and reliably with reference to the state information group of the first-version model file and the predetermined occupancy ratio corresponding to the first-version model file. Subsequently, these tasks may be processed concurrently, thereby improving the computational efficiency of the neural network accelerator. For tasks that cannot be processed concurrently, serial processing may be performed on these tasks.

Any method for generating a task scheduling and execution instruction provided in the embodiments of this disclosure may be implemented by any suitable device with a data processing capability, including but not limited to a terminal device and a server. Alternatively, any method for generating a task scheduling and execution instruction provided in the embodiments of this disclosure may be implemented by a processor. For example, the processor implements any method for generating a task scheduling and execution instruction described in the embodiments of this disclosure by invoking corresponding instructions stored in a memory. Details are not described below again.

Persons of ordinary skills in the art may understand that: all or some of the steps for implementing the foregoing method embodiments may be completed through hardware related to program instructions. A program may be stored in a computer readable storage medium. During execution, the program performs the steps including the foregoing method embodiments. The foregoing storage medium includes various media that may store program code, such as a read-only memory (ROM), a random access memory (RAM), a magnetic disk, or a compact disc.

### Exemplary apparatus

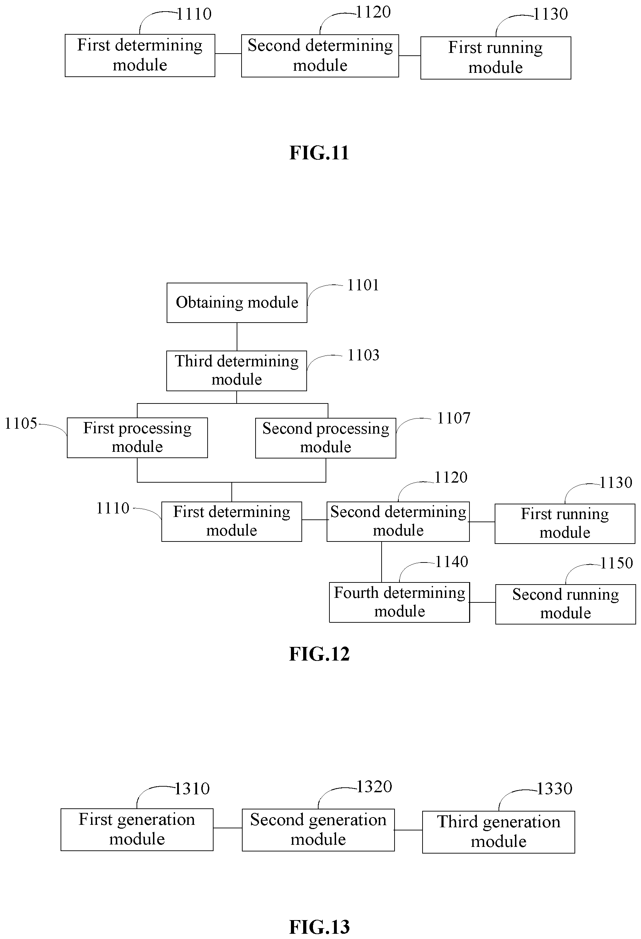

FIG. 11 is a schematic diagram of a structure of a task scheduling and execution apparatus according to an exemplary embodiment of this disclosure. The apparatus shown in FIG. 11 may be configured to implement the embodiments of any task scheduling and execution method in this disclosure. The apparatus shown in FIG. 11 includes a first determining module 1110, a second determining module 1120, and a first running module 1130.

The first determining module 1110 is configured to determine that there are first target tasks corresponding to first-version model files. The first-version model file occupies computing resources of a neural network accelerator according to a predetermined occupancy ratio in a running state.

The second determining module 1120 is configured to determine a set of the first target tasks that are determined by the first determining module 1110 and satisfy a preset concurrent execution condition as a first task group based on a state information group of the first-version model file and the predetermined occupancy ratio. The state information group of the first-version model file includes states each respectively corresponding to each function unit of the neural network accelerator in the running state of the first-version model file.

The first running module 1130 is configured to concurrently run the first-version model files respectively corresponding to the first target tasks in the first task group determined by the second determining module 1120.

In an optional example, that a plurality of the first target tasks satisfy the preset concurrent execution condition may include any one or more of the following.

In an information set composed of state information groups respectively corresponding to the first target tasks in the plurality of first target tasks, for all states corresponding to any one of the function units: one state is a shared state, and remaining states are all idle states; or alternatively, all states are idle states.

A sum of predetermined occupancy ratios respectively corresponding to the first target tasks in the plurality of first target tasks is smaller than a preset ratio.

In an optional example, as shown in FIG. 12, the apparatus further includes:
an obtaining module 1101, configured to obtain a task queue, where each task in the task queue corresponds to a neural network model;
a third determining module 1103, configured to determine whether corresponding information about a partitioning manner exists in a target neural network model corresponding to a second target task, wherein the second target task is any task in the task queue that is obtained by the obtaining module 1101;
a first processing module 1105, configured to partition the second target task in response to that the third determining module 1103 determines that the corresponding information about the partitioning manner exists in the target neural network model, to obtain K partitioned tasks, and add the K partitioned tasks to a task scheduling table, wherein the K partitioned tasks correspond to K operator groups that are obtained by partitioning the target neural network model based on the information about the partitioning manner corresponding to the target neural network model; and
a second processing module 1107, configured to add the second target task to the task scheduling table in response to that the third determining module 1103 determines that the corresponding information about the partitioning manner does not exist in the target neural network model.

The first determining module 1110 is specifically configured to determine the first target task having the corresponding first-version model file from the task scheduling table.

In an optional example, as shown in FIG. 12, the apparatus further includes:
a fourth determining module 1140, configured to determine a second task group, wherein the second task group includes a set of third target tasks, in the task scheduling table, except the first target tasks in the first task group determined by the second determining module 1120; and
a second running module 1150, configured to run, in a preset order, second-version model files each respectively corresponding to each of the third target tasks in the second task group determined by the fourth determining module 1140, wherein the second-version model files occupy all the computing resources in a running state.

FIG. 13 is a schematic diagram of a structure of an apparatus for generating a task scheduling and execution instruction according to an exemplary embodiment of this disclosure. The apparatus shown in FIG. 13 may be configured to implement the embodiments of any method for generating a task scheduling and execution instruction in this disclosure. The apparatus shown in FIG. 13 includes a first generation module 1310, a second generation module 1320, and a third generation module 1330.

The first generation module 1310 is configured to generate a first-version model file corresponding to a first operator group through compilation. The first-version model file occupies computing resources of a neural network accelerator according to a predetermined occupancy ratio in a running state.

The second generation module 1320 is configured to generate a state information group of the first-version model file generated by the first generation module 1310 based on a function unit group corresponding to the first operator group. The function unit group corresponding to the first operator group includes each function unit of the neural network accelerator that is used for running of the first operator group. The state information group of the first-version model file includes states respectively corresponding to each function unit of the neural network accelerator in the running state of the first-version model file.

The third generation module 1320 is configured to generate a task scheduling and execution instruction based on the first-version model file generated by the first generation module 1310, the state information group of the first-version model file generated by the second generation module 1320, and the predetermined occupancy ratio. The task scheduling and execution instruction is used for implementing the task scheduling and execution method in the embodiment shown in FIG. 3.

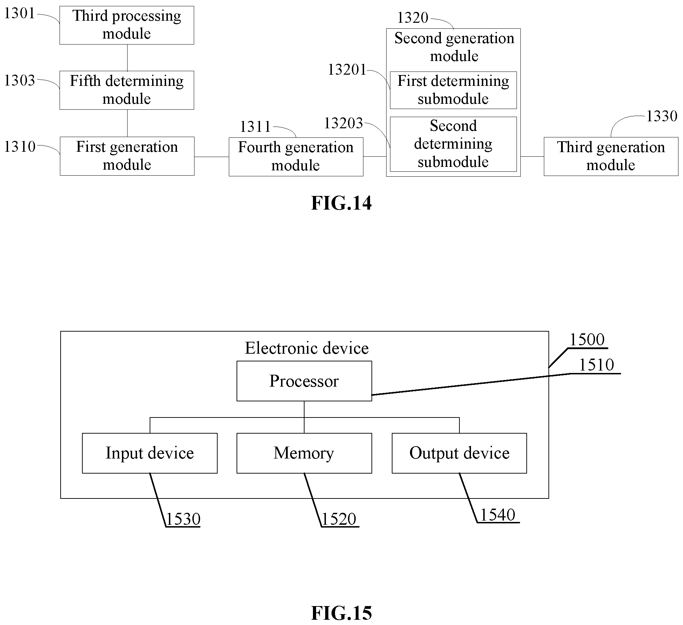

In an optional example, any function unit of the neural network accelerator is used as a target function unit. As shown in FIG. 14, the second generation module 1320 includes:
a first determining submodule 13201, configured to determine, in response to that a target function unit is in the function unit group corresponding to the first operator group, that a state corresponding to the target function unit in the state information group of the first-version model file generated by the first generation module 1310 is a shared state; and
a second determining submodule 13203, configured to determine, in response to that the target function unit is not in the function unit group corresponding to the first operator group, determine that the state corresponding to the target function unit in the state information group of the first-version model file generated by the first generation module 1310 is an idle state.

In an optional example, as shown in FIG. 14, the apparatus further includes:
a third processing module 1301, configured to partition, when function unit groups respectively corresponding to various operator units in a neural network model are not exactly the same, the neural network model into K operator groups corresponding to different function unit groups before the first-version model file corresponding to the first operator group is generated through compilation, and record corresponding information about a partitioning manner, wherein the function unit group corresponding to any operator group includes each function unit of the neural network accelerator that is used for running of the operator group; and
a fifth determining module 1303, configured to take each one of at least some operator groups in the K operator groups that are obtained by the third processing module 1301 through partitioning as a first operator group.

The third generation module 1320 is specifically configured to generate the task scheduling and execution instruction for each first operator group determined by the fifth determining module 1303 based on the first-version model file corresponding to the first operator group, the state information group of the first-version model file corresponding to the first operator group, the predetermined occupancy ratio corresponding to the first operator group, and the information about the partitioning manner. The task scheduling and execution instruction is used for implementing the task scheduling and execution method according to the embodiment shown in FIG. 4.

In an optional example, as shown in FIG. 14, the apparatus further includes:
a fourth generation module 1311, configured to generate, through compilation, second-version model files respectively corresponding to the first operator groups determined by the fifth determining module 1303, wherein the second-version model files occupy all the computing resources in a running state.

The third generation module 1320 is specifically configured to generate the task scheduling and execution instruction for each first operator group determined by the fifth determining module 1303 based on the first-version model file corresponding to the first operator group, the state information group of the first-version model file corresponding to the first operator group, the predetermined occupancy ratio corresponding to the first operator group, the information about the partitioning manner, and the second-version model file corresponding to the first operator group. The task scheduling and execution instruction is used for implementing the task scheduling and execution method according to the embodiment shown in FIG. 6.

In the apparatus in this disclosure, various optional embodiments, optional implementations, and optional examples described above may be flexibly selected and combined according to requirements, so as to implement corresponding functions and effects. This is not enumerated in this disclosure.

### Exemplary electronic device

FIG. 15 shows a block diagram of an electronic device according to an embodiment of this disclosure. An electronic device 1500 includes one or more processors 1510 and a memory 1520.

The processor 1510 may be a central processing unit (CPU) or another form of processing unit having a data processing capability and/or an instruction execution capability, and may control another component in the electronic device 1500 to perform a desired function.

The memory 1520 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1510 may run one or more computer program instructions to implement any of the method embodiments of this disclosure that are described above. For example, it is determined that there are first target tasks corresponding to first-version model files. The first-version model file occupies computing resources of a neural network accelerator according to a predetermined occupancy ratio in a running state. A set of the first target tasks that satisfy a preset concurrent execution condition is determined as a first task group based on a state information group of the first-version model file and the predetermined occupancy ratio. The state information group of the first-version model file includes states each respectively corresponding to each function unit of the neural network accelerator in the running state of the first-version model file. The first-version model files respectively corresponding to the first target tasks in the first task group are run concurrently.

In an optional example, the electronic device 1500 may further include an input device 1530 and an output device 1540. These components are connected to each other through a bus system and/or another form of connection mechanism (not shown).

In addition, the input device 1530 may further include, for example, a keyboard and a mouse. The output device 1540 may output various information to the outside. The output device 1540 may include, for example, a display, a speaker, a printer, a communication network, and a remote output device connected by the communication network.

Certainly, for simplicity, FIG. 15 shows only some of components in the electronic device 1500 that are related to this disclosure, and components such as a bus and an input/output interface are omitted. In addition, according to specific application situations, the electronic device 1500 may further include any other appropriate components.

### Exemplary computer program product and computer readable storage medium

In addition to the foregoing methods and apparatuses, the embodiments of this disclosure may also relate to a computer program product, which includes computer program instructions. When the computer program instruction is run by a processor, the processor is enabled to perform the steps, in any method embodiment of this disclosure, that are described in the "exemplary method" part of this specification. For example, it is determined that there are first target tasks corresponding to first-version model files. The first-version model file occupies computing resources of a neural network accelerator according to a predetermined occupancy ratio in a running state. A set of the first target tasks that satisfy a preset concurrent execution condition is determined as a first task group based on a state information group of the first-version model file and the predetermined occupancy ratio. The state information group of the first-version model file includes states respectively corresponding to each function unit of the neural network accelerator in the running state of the first-version model file. The first-version model files respectively corresponding to the first target tasks in the first task group are run concurrently.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, which stores a computer program instruction. When the computer program instruction is run by the processor, the processor is enabled to perform the steps, of the method according to any method embodiment of this disclosure, that are described in the "exemplary method" part of this specification.

The computer readable storage medium may be one readable medium or any combination of a plurality of readable media. The readable medium may be a readable signal medium or a readable storage medium. The readable storage medium may include, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A task scheduling and execution method, comprising:
determining that there are first target tasks corresponding to first-version model files, wherein the first-version model file occupies computing resources of a neural network accelerator according to a predetermined occupancy ratio in a running state;
determining a set of the first target tasks that satisfy a preset concurrent execution condition as a first task group based on a state information group of the first-version model file and the predetermined occupancy ratio, wherein the state information group of the first-version model file comprises states respectively corresponding to each function unit of the neural network accelerator in the running state of the first-version model file; and
concurrently running the first-version model files respectively corresponding to the first target tasks in the first task group.

2. The method according to claim 1, wherein that a plurality of the first target tasks satisfy the preset concurrent execution condition comprises any one or more of the following:
in an information set composed of state information groups respectively corresponding to the first target tasks in the plurality of first target tasks, for all states corresponding to any one of the function units: one state is a shared state, and remaining states are all idle states; or alternatively, all states are idle states; and
a sum of predetermined occupancy ratios respectively corresponding to the first target tasks in the plurality of first target tasks is smaller than a preset ratio.

3. The method according to claim 1 or 2, wherein the method further comprises:
obtaining a task queue, wherein each task in the task queue corresponds to a neural network model;
determining whether corresponding information about a partitioning manner exists in a target neural network model corresponding to a second target task, wherein the second target task is any task in the task queue;
in response to that the corresponding information about the partitioning manner exists in the target neural network model, partitioning the second target task to obtain K partitioned tasks, and adding the K partitioned tasks to a task scheduling table, wherein the K partitioned tasks correspond to K operator groups that are obtained by partitioning the target neural network model based on the information about the partitioning manner corresponding to the target neural network model; and
in response to that the corresponding information about the partitioning manner does not exist in the target neural network model, adding the second target task to the task scheduling table;
the determining that there are first target tasks corresponding to first-version model files comprises:
determining the first target task having the corresponding first-version model file from the task scheduling table.

4. The method according to claim 3, wherein the method further comprises:
determining a second task group, wherein the second task group comprises a set of third target tasks, in the task scheduling table, except the first target tasks in the first task group; and
running second-version model files each respectively corresponding to each of the third target tasks in the second task group in a preset order, wherein the second-version model files occupy all the computing resources in a running state.

5. A method for generating a task scheduling and execution instruction, comprising:
generating a first-version model file corresponding to a first operator group through compilation, wherein the first-version model file occupies computing resources of a neural network accelerator according to a predetermined occupancy ratio in a running state;
generating a state information group of the first-version model file based on a function unit group corresponding to the first operator group, wherein the function unit group corresponding to the first operator group comprises each function unit of the neural network accelerator that is used for running of the first operator group, and the state information group of the first-version model file comprises states respectively corresponding to function units of the neural network accelerator in the running state of the first-version model file; and
generating a task scheduling and execution instruction based on the first-version model file, the state information group of the first-version model file, and the predetermined occupancy ratio, wherein the task scheduling and execution instruction is used for implementing the task scheduling and execution method according to claim 1 or 2.

6. The method according to claim 5, wherein any one of the function units of the neural network accelerator is taken as a target function unit, and the generating a state information group of the first-version model file based on a function unit group corresponding to the first operator group comprises:
in response to that the target function unit is in the function unit group corresponding to the first operator group, determining that a state corresponding to the target function unit in the state information group of the first-version model file is a shared state; and
in response to that the target function unit is not in the function unit group corresponding to the first operator group, determining that the state corresponding to the target function unit in the state information group of the first-version model file is an idle state.

7. The method according to claim 5, wherein
before the generating a first-version model file corresponding to a first operator group through compilation, the method further comprises:
when function unit groups respectively corresponding to the operator units in a neural network model are not exactly the same, partitioning the neural network model into K operator groups respectively corresponding to different function unit groups, and recording corresponding information about a partitioning manner, wherein the function unit group corresponding to any operator group comprises each function unit of the neural network accelerator that is used for running of the operator group; and
taking each one of at least some operator groups in the K operator groups as the first operator group; and
the generating a task scheduling and execution instruction based on the first-version model file, the state information group of the first-version model file, and the predetermined occupancy ratio, wherein the task scheduling and execution instruction is used for implementing the task scheduling and execution method according to claim 1 or 2, comprises:
for each first operator group, generating the task scheduling and execution instruction based on the first-version model file corresponding to the first operator group, the state information group of the first-version model file corresponding to the first operator group, the predetermined occupancy ratio corresponding to the first operator group, and the information about the partitioning manner, wherein the task scheduling and execution instruction is used for implementing the task scheduling and execution method according to claim 3.

8. The method according to claim 7, further comprising:
generating second-version model files respectively corresponding to the first operator groups through compilation, wherein the second-version model files occupy all the computing resources in a running state; and
the for each first operator group, generating the task scheduling and execution instruction based on the first-version model file corresponding to the first operator group, the state information group of the first-version model file corresponding to the first operator group, the predetermined occupancy ratio corresponding to the first operator group, and the information about the partitioning manner, wherein the task scheduling and execution instruction is used for implementing the task scheduling and execution method according to claim 3, comprises:
for each first operator group, generating the task scheduling and execution instruction based on the first-version model file corresponding to the first operator group, the state information group of the first-version model file corresponding to the first operator group, the predetermined occupancy ratio corresponding to the first operator group, the information about the partitioning manner, and the second-version model file corresponding to the first operator group, wherein the task scheduling and execution instruction is used for implementing the task scheduling and execution method according to claim 4.

9. A task scheduling and execution apparatus, comprising:
a first determining module, configured to determine that there are first target tasks corresponding to first-version model files, wherein the first-version model file occupies computing resources of a neural network accelerator according to a predetermined occupancy ratio in a running state;
a second determining module, configured to determine a set of the first target tasks that are determined by the first determining module and satisfy a preset concurrent execution condition as a first task group based on a state information group of the first-version model file and the predetermined occupancy ratio, wherein the state information group of the first-version model file comprises states respectively corresponding to function units of the neural network accelerator in the running state of the first-version model file; and
a first running module, configured to concurrently run the first-version model files respectively corresponding to the first target tasks in the first task group determined by the second determining module.

10. An apparatus for generating a task scheduling and execution instruction, comprising:
a first generation module, configured to generate a first-version model file corresponding to a first operator group through compilation, wherein the first-version model file occupies computing resources of a neural network accelerator according to a predetermined occupancy ratio in a running state;
a second generation module, configured to generate a state information group of the first-version model file generated by the first generation module based on a function unit group corresponding to the first operator group, wherein the function unit group corresponding to the first operator group comprises each function unit of the neural network accelerator that is used for running of the first operator group, and the state information group of the first-version model file comprises states respectively corresponding to various function units of the neural network accelerator in the running state of the first-version model file; and
a third generation module, configured to generate a task scheduling and execution instruction based on the first-version model file generated by the first generation module, the state information group of the first-version model file generated by the second generation module, and the predetermined occupancy ratio, wherein the task scheduling and execution instruction is used for implementing the task scheduling and execution method according to claim 1 or 2.

11. A computer readable storage medium, wherein the storage medium stores a computer program, and the computer program is used for implementing the task scheduling and execution method according to any one of claims 1 to 4, or for implementing the method for generating a task scheduling and execution instruction according to any one of claims 5 to 8.

12. An electronic device, comprising:
a processor; and
a memory, configured to store processor-executable instructions, wherein
the processor is configured to read the executable instructions from the memory, and execute the instruction to implement the task scheduling and execution method according to any one of claims 1 to 4, or implement the method for generating a task scheduling and execution instruction according to any one of claims 5 to 8.

13. A computer program product, wherein when instructions in the computer program product are executed by a processor, the task scheduling and execution method according to any one of claims 1 to 4, or the method for generating a task scheduling and execution instruction according to any one of claims 5 to 8 is implemented.
